# EUROPEAN PATENT SPECIFICATION

(11) **EP 2 703 321 B1**
(45) Date of publication and mention of the grant of the patent: **26.11.2014**
(21) Application number: 12382339.5
(22) Date of filing: 04.09.2012
(51) Int. Cl.: B65G 17/08, B65G 45/10

(54) **Link for conveyor chain, conveyor chain and method of assembling the same**
Glied für Förderkette, Förderkette und Verfahren zu deren Montage
Maillon pour chaîne transporteuse, chaîne transporteuse et procédé d'assemblage associé

(43) Date of publication of application: 05.03.2014
(73) Proprietor: Nunez Bajo, Magdalena, 47003 Valladolid (ES)
(72) Inventor: San Miguel Nunez, Javier, 47012 VALLADOLID (ES)
(74) Representative: Temino Ceniceros, Ignacio

(56) References cited:
- EP-A1- 2 168 890
- US-A- 2 065 931

## Description

The present invention presents a link for conveyor chain according to the preamble of claim 1, a conveyor chain comprising a plurality of said links and a method of assembling said conveyor chain. This invention is specially designed to be used with food products, and the like, where optimum cleaning conditions are required.

### State of the prior art

Conveyor chains that incorporate engagements by tongue and groove between the links of the chain are known from the state of the art. It is known for example the patent GB831327 that describes a conveyor chain comprising some links with serrations, ridges or pines projecting from its upper surface. The adjacent links are connected by sliding longitudinally a bearing of a link inside a channel of the adjacent link. The links are kept in place with threaded pines which engage two adjacent links to each other in a cross direction. The engagement in a longitudinal direction is performed by tongue and groove.

Another example is the patent GB1320303 that describes a conveyor belt comprising different articulated links connected together covering all the upper surface in any relative position of the links so foreign bodies cannot enter into the chain. The chain is attached laterally through the introduction of coupling projections in through holes that the links comprise for this purpose. In addition, the links have at the top with which to drag the elements that are placed in the chain that in this case, is specially designed to transport chips. Further, this retaining system is also very dirty because the access to the inside of the holes for cleaning is not allowed.

It is also known the patent GB1494138 that is a chain is a chain composed by links with ledges and recesses so the coupling between links is done by setting the ledges and recesses between adjacent links. The chain is cleaned when the movement of the chain is produced, since one of the ledges of the links is slashed and acts as the scraper of dirt for the adjacent link.

The document US853129 describes a conveyor chain comprising some links with a straight section overlapped that overlaps into adjacent links to avoid material to gets in through the chain. Each link also comprises a coupling hook substantially cylindrical and a rear socket on the opposite side, conforming to the shape of the coupling hook. The engagement of the links is performed by tongue and groove.

The document representing the closest prior art is the patent document EP2168890. This document discloses a link for conveyor chain as stated in the preamble of the appended claim 1 and describes a conveyor chain for food products, and the like, that ensures an easy cleaning of the same, even a self-cleaning effect, and allowing the conveying of products in bulk, in particular granular or powdery products, deposited directly on the chain without affecting the correct operation of the same. The technical problem that solves said document is to give to the chain a mechanism for self-cleaning in the relative tilt movement between links, as well as a reservoir for depositing the dirt so that this dirt does not impede the rotation and the proper operation of the conveyor chain. Moreover, the design of this conveyor chain also allows the use of simple cleaning systems such as blowing systems, pressure water, etc., so that the dirt from the reservoir can be evacuated.

However none of the chains with a cross-assembly of links by tongue and groove can perform rotation movements in a longitudinal direction of the chain. In addition none of the chains in the state of the art would allow the cross retention of the links and the rotation of the chain. With none of the cited documents could be performed a guiding for the rotation of the chain. On the other hand, there are documents in the state of the art that envisage the cross retention of the links, but such retention is performed with elements external to the links themselves, and furthermore said belts are very rigid and do not allow the rotation.

### Explanation of the invention

The present invention describes a link for a conveyor chain as stated in claim 1, a conveyor chain comprising said links as stated in claim 7 and a method of assembling the conveyor chain that allow the movement of rotation of the conveyor chain and allow the guiding of said movements as stated in claim 9.

The link of the present invention is a link for conveyor chain, specially designed for conveyor chains in which solid foodstuffs are conveyed. Each link comprises a male coupling means and a female coupling means, being both complementary such that the similar links can be joined together in a conveyor chain. The female coupling means comprises a first upper surface and a second lower surface and between both define a groove that ends in a narrow mouth opening. The male coupling means of the link comprises an upper segment and a ledge with a flared end. The ledge extends along the longitudinal surface of the link and on the flared end has some sharp edges that meet a cleaning function since the allow dragging the dirt that remains inside the links when there is a chain formed by similar adjacent links. The ledge and the upper segment of the male coupling means form a channel. The key of these links is that the groove of the female coupling means is finished in a straight section so that the set of the groove with said straight section has a length equal to or greater than the ledge of the male coupling means, being said distance measured in the cross direction of the link.

The link may further comprise a retaining and rotation pivot at one end of the lower portion of the flared end of ledge of the male coupling means. In this case, the link in addition comprises a retaining and rotation slot at the end of the lower surface of the female coupling means, corresponding with the retaining and rotation pivot. Since the retaining and rotation pivot and the retaining and rotation slot are placed a the same distance from the end, being one in the male coupling means and the other in the female coupling means, similar links can be linked together to form a conveyor chain that can make rotation movements but in which the links themselves comprise a retention in the cross direction of the chain.

In a preferred embodiment of the link the retaining and rotation pivot has a spherical shape. This geometry provides important advantages as regards as the friction between the retaining and rotation pivot and the walls of the retaining and rotation slot is reduced when two links are assembled or disassembled in an adjacent manner, and the pivot of one of them is housed inside the retaining and rotation slot of the other, or when they are disassembled.

In another embodiment of the invention, at least one of the edges of the lower surface of the female coupling means comprises a bevel. In a preferred embodiment this edge is which is in parallel with the retaining and rotation slot and is closest to it. The bevel is oriented towards the groove of the female coupling means. The object of the bevel is to facilitate the coupling between two similar links. The bevel is in the edge closest to the slot because it simplifies the introduction of the part of male coupling means of the adjacent link which has the retaining and rotation pivot that must be introduced into the retaining and rotation slot.

The link of the present invention may also comprise a second bevel located on the edge of the retaining and rotation slot in order to facilitate the removal of a link with regard to an adjacent link. Said second link is placed in the direction in which the male coupling means is removed of the retaining and rotation slot to allow the output of said male retaining means more easily, allowing the deformation of the female retaining means.

It is another object of the invention a conveyor chain comprising a plurality of links such as those described above. The conveyor chain of the present invention allows to work with food products, and the like, in a solid state. In these cases, optimum cleaning conditions are required to avoid the proliferation of bacteria and other microorganisms. This chain is formed by a plurality of links engaged together in a jointed manner through coupling means by tongue and groove, allowing an angle of tilt between the links and the direct coupling thereof by transverse slide.

The key of the chain of the present invention lies in the engagement of similar links as those described above in such a way that the said conveyor chain can make rotation movements guided by the links themselves, thanks to the groove with straight section of the female coupling means. In addition, in embodiments in which the link incorporates a retaining and rotation pivot and a retaining and rotation slot, it is also ensured the retention of links in the cross direction of the chain and the guiding of the rotation is complemented with the guiding of the pivot inside the retaining and rotation slot.

The conveyor chain comprises links as those described above. The ledge of a first link remains inside the groove with straight section of the female coupling means of a second link adjacent to it. The ledge of the first link can be moved inside said groove with straight section, and thus allowing the rotation of the chain. Since the length of the groove with straight section is equal to the length of the ledge, said ledge can be moved in the longitudinal direction of the chain from a position in which is totally introduced inside the groove to a position in which is out practically in its entirety, only remaining inside the groove the flared end that is retained at the narrow end of the groove.

In an embodiment of the invention, the conveyor chain has all the same links, all comprising a retaining and rotation pivot at one end of the lower portion of the flared end of ledge of the male coupling means, and comprises a retaining and rotation slot at the end of the lower portion of the female coupling means, corresponding with the retaining and rotation pivot. The retaining and rotation pivot of a first link of the chain is housed inside the retaining and rotation slot of a second link of the chain, adjacent to said first link. The pivot is retained between the sidewalls of the retaining and rotation slot ensuring the retention of the adjacent links in the cross direction of the chain. In addition, the retaining and rotation pivot can be moved in the longitudinal direction of the retaining and rotation slot, allowing the rotation of the chain.

A third object of the invention is the method of assembling the chain described above in any of the proposed embodiments. The method comprises a step of introducing the male coupling means of a first link inside the groove with straight section of the female coupling means of a second link adjacent to the first link. Said introduction is performed in the cross direction of the chain such that the retaining and rotation pivot of the first link contacts with the lower edge of the female coupling means deforming said edge until the retaining and rotation pivot is introduced in the retaining and rotation slot of the second link and the aforementioned edge returns to its initial position.

The assembly of the links of the chain is performed transversely. To do so, the male coupling means of a link is placed inside the female coupling means, in the groove designed for this purpose, remaining clear the straight section of the groove to allow the relative longitudinal movement between two links, and thus allowing the rotation of the chain. The assembly of two adjacent links ends when the introduction of the male coupling means of a link into the groove of the adjacent link finishes. In the embodiments in which the link comprises a retaining and rotation pivot and a retaining and rotation slot, the assembly ends in the moment in which the retaining and rotation pivot of one of the links remains inside the retaining and rotation slot of the other link. At this time no longer possible the transverse displacement of one link to another but it is possible the rotation of the chain by the displacement of the pivot in the longitudinal direction of the slot.

In the embodiment of the invention in which the link incorporates in the female coupling means a bevel at the end in which the retaining and rotation slot is, the assembly operations of the chain are facilitated, since at the moment in which the pivot of a link contacts with the side of the female coupling means of the link wherein is being introduced, as it has the bevel, less force is required. The pivot, during its introduction into the adjacent link follows the direction of the bevel, pushing out the end of the female coupling means until the pivot reaches the position of the slot in which is introduced, thus ending the assembly.

Also, when the link comprises a second bevel, the disassembly of two adjacent links is performed in a much more simple manner, since at the moment in which the pivot of the link to be removed contacts with the second bevel of the adjacent link, located in the retaining slot, this allows the deformation of the female retaining means, since it pushes it out, allowing an easy removal.

Throughout the description and claims, the word "comprises" and its variations are not intended to exclude other technical features, additives, components or steps. For those skilled in the art, other objects, advantages and characteristics of the invention will emerge in part from the description and in part from the practice of the invention. The following examples and drawings are provided by way of illustration, and are not intended to be limiting of the present invention. Furthermore, the present invention covers all the possible combinations of particular and preferred embodiments herein indicated.

### Brief description of the drawings

Figure 1 shows a perspective view of the link of the invention in which the upper portion of the link is clearly visible.
Figure 2 shows another perspective view of the link of the invention in which the lower portion of the link is visible.
Figure 3 shows the engagement of two adjacent links.
Figure 4 shows a perspective view of the assembly operation of two adjacent links.
Figure 5 shows a perspective view of part of the conveyor chain when is performing a turn.
Figure 6 shows a perspective view similar to that figure 5 but in which it can be seen the upper portion of the chain.

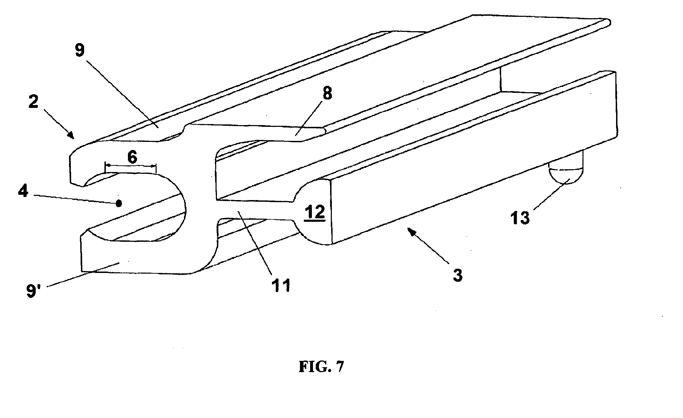

Figure 7 shows a perspective view of a link of the chain in a possible embodiment in which the groove of the female coupling means has another possible geometry.

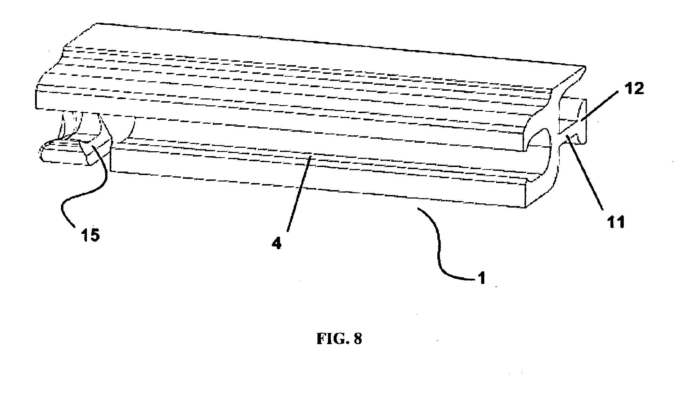

Figure 8 shows a perspective view of the link of the invention in which the retaining and rotation slot and the second bevel can be seen.

### References:

1: Link; 1': First link; 1": Second link; 2: Female coupling means; 3: Male coupling means; 4: Groove; 5: Sharp edges; 6: Opening chamber; 7: Straight section; 8: Arched slot; 9: Upper surface; 9': Lower surface; 10: Bevel; 11: Ledge; 12: Flared end; 13: Retaining and rotation pivot; 14: Retaining and rotation slot; 15: Second bevel

### Detailed explanation of embodiments

The present invention proposes a link for conveyor chain, a conveyor chain and method of assembling the same.

The link for conveyor chain proposed is the type of those which have male coupling means (3) and female coupling means (2); and where the female coupling means (2) comprises a first upper surface (9) and a second lower surface (9') defining a groove (4) that ends in a narrow mouth opening; and where the male coupling means (3) comprises an upper segment (8) and a ledge (11) extending in the longitudinal direction of the link (1) and having its end flared (12), such that the upper segment (8) forms together with the ledge (11) a channel (7) in the male coupling means (3); wherein said link (1) is **characterized in that** the groove (4) extends towards the middle area of the link (1) through a straight section (6) in cross direction of the link, so that the groove (4) with the straight section (6) has a length equal to or greater than the ledge (11) of the male coupling means (3), measured in the cross direction of link.

The flared end (12) of ledge (11) of the male coupling element may comprise sharp edges (5) which in an assembling position of adjacent links are in contact with the inner part of the first upper surface (9) and with the inner part of the second lower surface (9').

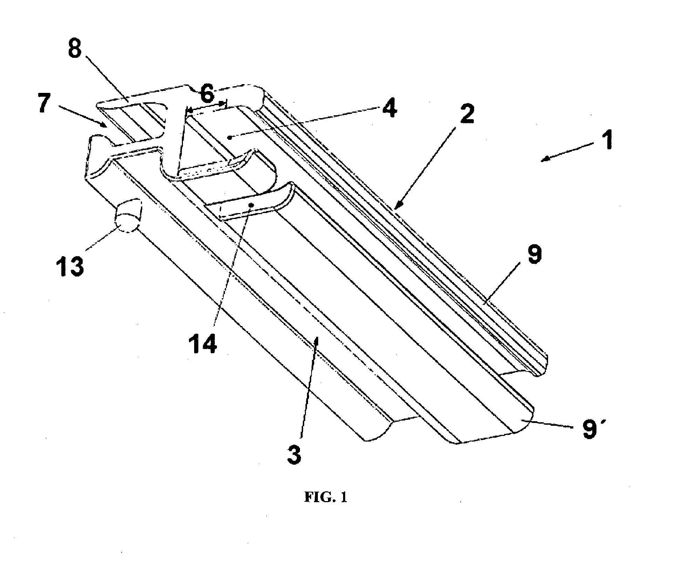

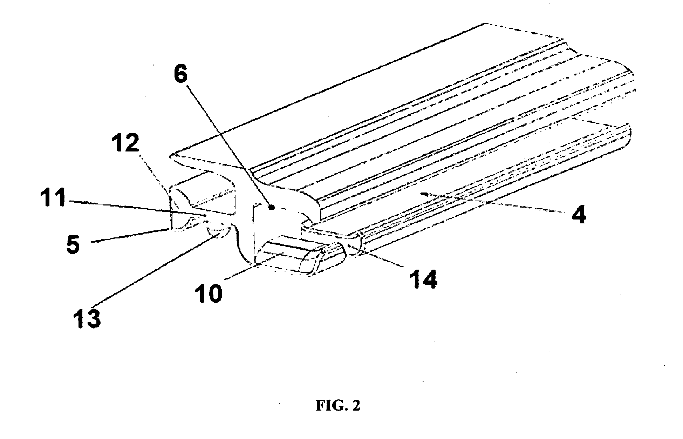

The link (1) of the invention can be used in a conveyor chain in combination with other links (1) alike to this one. Each link comprises a female coupling means (2) and a male coupling means (3) designed in a complementary manner among themselves such that similar links can be placed in the chain adjacent to each other, connected among themselves. The key of the link of the present invention is the straight section (6) in the groove (4) of the female coupling means (2) and which allow, when several links are linked, the movement in cross direction of the link, of a link with respect to the adjacent link. Since the groove (4), including the straight section (6) has a length equal to or greater, measured in a cross direction of the link, than the ledge (14) of the male coupling means (3), when two similar links are linked to each other, the ledge (14) of one of them can be moved freely in the cross direction of the link along the groove (4) with straight section (6) of the adjacent link. This movement is what allows the rotation. In Figures 1 and 2 it has been depicted the link of the invention and therein the different parts described can be seen. The greater the length of the straight section (6) of the groove (4) and the ledge (11) is, as a result, the greater the ledge (11) extending in a longitudinal direction of the male coupling means (3) will be, since their lengths are related. In this case the inner turning radius of the chain is less so that the space of the machinery to be used is reduced, being thus achieved an important advantage over conveyor chains and the links of the state of the art. In this way, the length control of the straight section (6) of the groove (4) allows the control of the inner turning radius of the chain once assembled and this allows for significant decreases in the size of the machinery required for the use of the chain.

In a preferred embodiment of the invention the link of the invention comprises a retaining and rotation pivot (13) at one end of the lower portion of the flared end (12) of ledge (11) of the male coupling means (3) and comprises a retaining and rotation slot (14) at the end of the lower portion of the female coupling means (2), corresponding with the retaining and rotation pivot (13). In this way, the link (1) of the present invention comprises means of allowing the movement in its cross direction when it is linked in a jointed manner to similar links (1) and comprises means of ensuring the retention in a longitudinal direction of the link in that same situation of engagement of two similar links. The retaining and rotation slot (14) has some given measures corresponding with the retaining and rotation pivot (13) since they are designed such that when two similar links are linked (1), the retaining and rotation pivot (13) remains inside the retaining and rotation slot (14) of the adjacent link. Thus the cross length of the retaining and rotation slot (14) is equal to the length of the retaining and rotation pivot (13). The length of the retaining and rotation slot (13) in a longitudinal direction is equal to the length in a cross direction to the straight section (6) of groove (4) of the female coupling element (2).

In a particular embodiment, the retaining and rotation pivot (13) has a spherical shape. In this way there is less friction when two adjacent links are linked since the pivot (13) does not have borders that rub against the walls of the retaining and rotation slot (14) of a adjacent link (1) to which it is attached and regarding to which it moves.

In a more preferred embodiment, at least an edge of the lower portion (9') of the female coupling means (2) comprises a bevel (10) oriented towards the groove (4) of said female coupling means (2). The beveled edge is in a preferred embodiment the edge closest to the retaining and rotation slot (14). The link also comprises a second bevel (15), located on the edge of the retaining and rotation slot (14) in order to facilitate the removal of a link (1) with regard to an adjacent link (1). The beveled design of the edge allows, if it is assembled or disassembled a conveyor chain with similar links (1), the assembly to be simpler since when the retaining and rotation pivot (13) of a link contacts with the beveled edge (10), said bevel (10) allows the guiding of the pivot (13) and the opening of the end of the lower surface (9') to allow the passage of the ledge (11) of the link that is being introduced.

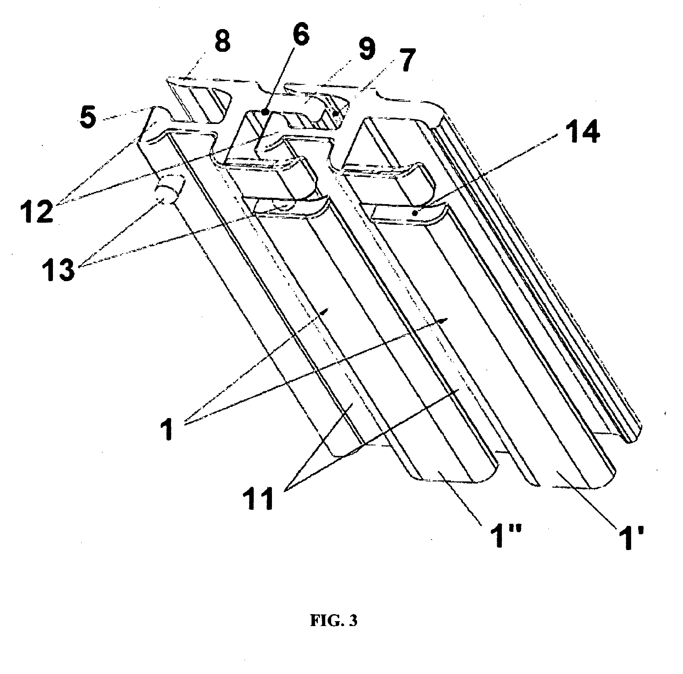

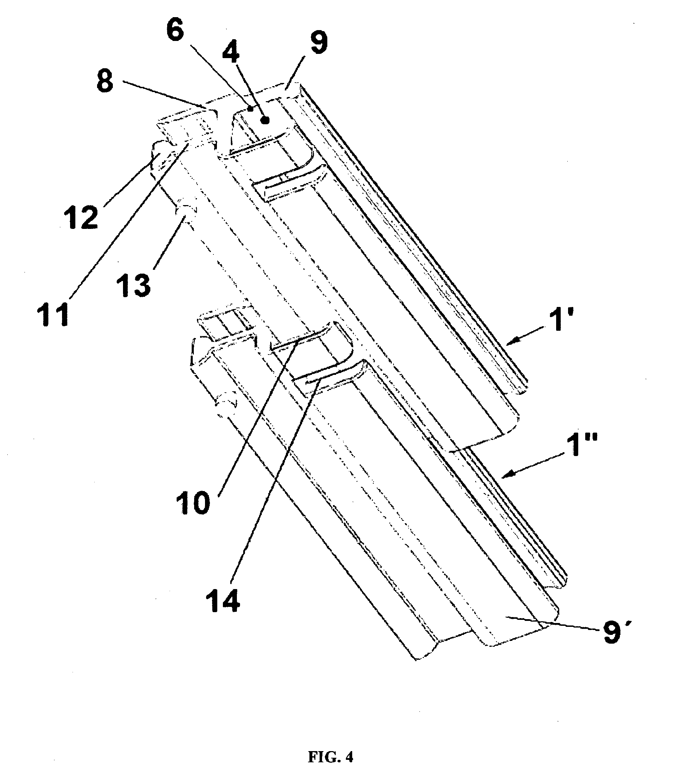

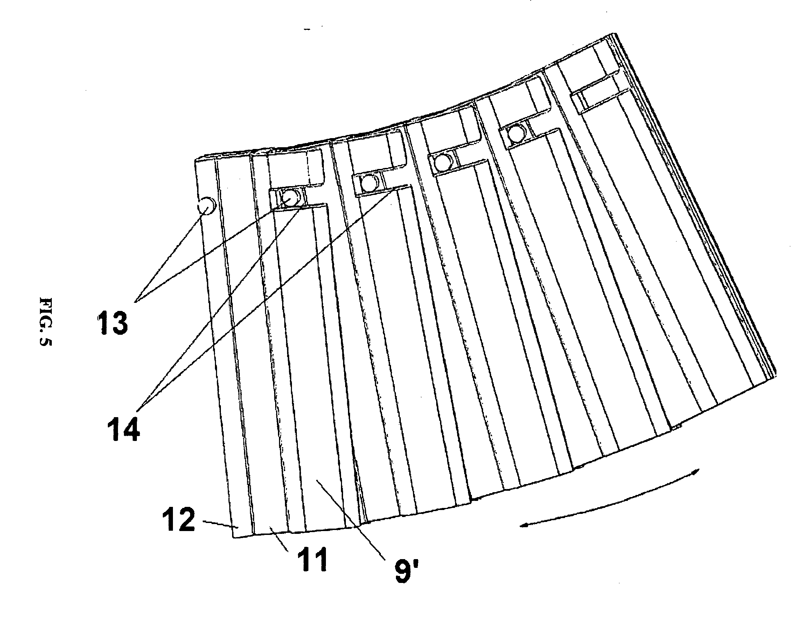

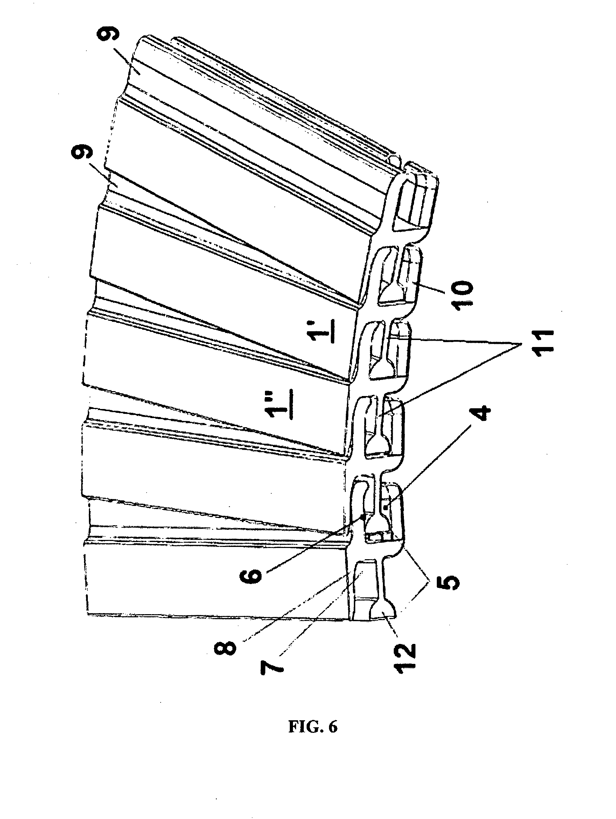

It is also an object of the present invention a conveyor chain formed by a plurality of links according to any of the embodiments described above wherein said links are held together in the longitudinal direction of the chain by tongue and groove and which is **characterized in that** the ledge (14) of a first link (1') remains inside the groove (4) with straight section (6) of the female coupling means (2) of a second link (1") adjacent to the first link (1') being able to move inside said groove (4) with straight section (6) and thus allowing the rotation of the chain. Figures 3 and 4 show the engagement of two similar links which creates a chain like the one protected by the present invention. In the Figures 5 and 6 it can be seen how the rotation of the chain is produced.

In a preferred embodiment of the invention, the above conveyor chain has as a feature that all the links comprise a cross retaining and rotation pivot (11) at one end of the lower portion of the flared end (12) of ledge (11) of the male coupling means (3) and comprises a retaining and rotation slot (12) at the end of the lower portion of the female coupling means (2), corresponding with the retaining and rotation pivot (13); and where the retaining and rotation pivot (13) of a first link (1') is housed inside the retaining and rotation slot (14) of a second link (1") adjacent to the first link (1') the pivot (13) being retained between the sidewalls of the retaining and rotation slot (14) ensuring the retention of the adjacent links in the cross direction of the chain; and where the retaining and rotation pivot (13) can be moved in the longitudinal direction of the retaining and rotation slot (14) allowing the rotation of the chain. This can be seen clearly in Figure 5 wherein it is shown the chain in a rotation position with a view of the lower portion of the chain in which the retaining and rotation pivot (13) and the retaining and rotation slot (14) can be seen. It can be seen how the pivot (13) is retained in the cross direction of the chain by the walls of the slot (14) but it can be moved freely in the longitudinal direction of the chain through the slot (14). This last effect combined with the groove (4) with straight section (6) allows the rotation of the chain.

In the chain of the present invention, similar links (1) remain linked to each other by tongue and groove. In this position, the upper surface (9) of the female coupling means (2) of a second link (1") remains inside the channel (7) of the male coupling means (3) of a first link (1') adjacent to this one. The aforementioned upper surface (9) plays into the channel (7), thus allowing the tilt between adjacent links. In a embodiment of the invention, the channel (7) extends in a cross direction of the link which means that part of the channel (7) of the first link (1') is not covered with the upper surface (9) of the second link (1"), conforming a variable-volume chamber in the joint of the chain to which the dirt that drag said upper surface (9) accedes, especially during the reverse rotation of the chain. The channel (7) is totally closed so that the products placed on the chain cannot access inside the chain.

During the tilt and the reverse rotation of the links in the chain, the sharp edges (5) of the flared end (12) in the ledge (11) of the male coupling means act as scrapers of the dirt settled in the groove (4) with straight section (6), loosening the residues and cleaning said groove (4) with straight section (6).

Another object of the invention is the method for assembling the chain described in any of the previous embodiments which is **characterized in that** comprises a step of introducing the male coupling means (3) of a first link (1') inside the groove (4) with straight section (6) of the female coupling means (2) of a second link (1") adjacent to the first link in the cross direction of the chain such that the retaining and rotation pivot (11) of the first link (1') contacts with the lower edge of the female coupling means (2), deforming said edge until the retaining and rotation pivot (11) is introduced in the retaining and rotation slot (12) of the second link (1") and the aforementioned edge returns to its initial position. Figure 4 depicts clearly the assembly of the chain, which is performed in a transverse manner. The Figure 3 shows how two adjacent links of the chain look.

## Claims

1. Link for a conveyor chain of the type which have male coupling means (3) and female coupling means (2); and where the female coupling means (2) comprises a first upper surface (9) and a second lower surface (9') defining a groove (4) that ends in a narrow mouth opening; and where the male coupling means (3) comprises an upper segment (8) and a ledge (11) extending in the longitudinal direction of the link (1) and having its end flared (12), such that the upper segment (8) forms together with the ledge (11) a channel (7) in the male coupling means (3); wherein said link (1) is **characterized in that** the groove (4) extends towards the middle area of the link (1) through a straight section (6) in a cross direction of the link, so that the groove (4) with the straight section (6) has a length equal to or greater than the ledge (11) of the male coupling means (3), measured in the cross direction of link.

2. Link according to the claim 1 comprising a retaining and rotation pivot (13) at one end of the lower portion of the flared end (12) of ledge (11) of the male coupling means (3) and comprises a retaining and rotation slot (14) at the end of the lower portion of the female coupling means (2), corresponding with the retaining and rotation pivot (13).

3. Link according to the claim 2 wherein the retaining and rotation pivot (13) has a spherical shape.

4. Link according to any of the preceding claims wherein at least an edge of the lower portion (9') of the female coupling means (2) comprises a bevel (10) oriented towards the groove (4) of said female coupling means (2).

5. Link according to claim 4 wherein there is a second bevel (15) located on the edge of the retaining and rotation slot (14) in order to facilitate the removal of a link (1) with regard to an adjacent link (1).

6. Link according to any of the preceding claims wherein the ledge (11) of the male coupling element (3) comprises some sharp edges (5) on the flared end (12) remaining in contact with the first upper surface (9) and with the second lower surface (9') of the female coupling means (2).

7. Conveyor chain formed by a plurality of links according to any of the preceding claims wherein said links are held together in the longitudinal direction of the chain by tongue and groove and which is **characterized in that** the ledge (11) of a first link (1') remains inside the groove (4) with straight section (6) of the female coupling means (2) of a second link (1") adjacent to the first link (1') being able to move inside said groove (4) with straight section (6) and thus allowing the rotation of the chain.

8. Conveyor chain according to the claim 7 wherein all the links comprise a cross retaining and rotation pivot (13) at one end of the lower portion of the flared end (12) of ledge (11) of the male coupling means (3), and comprises a retaining and rotation slot (14) at the end of the lower portion of the female coupling means (2), corresponding with the retaining and rotation pivot (13); and wherein the retaining and rotation pivot (11) of a first link (1') is housed inside the retaining and rotation slot (12) of a second link (1") adjacent to the first link (1'), the pivot (13) being retained between the sidewalls of the retaining and rotation slot (14) ensuring the retention of the adjacent links in the cross direction of the chain; and where the retaining and rotation pivot (13) can be moved in the longitudinal direction of the retaining and rotation slot (14), allowing the rotation of the chain.

9. Method of assembling the chain of any of the claims 7 to 8 **characterized in that** it comprises a step of introducing the male coupling means (3) of a first link (1') inside the groove (4) with straight section (6) of the female coupling means (2) of a second link (1") adjacent to the first link in the cross direction of the chain such that the retaining and rotation pivot (13) of the first link (1') contacts with the lower edge of the female coupling means (2), deforming said edge until the retaining and rotation pivot (13) is introduced in the retaining and rotation slot (14) of the second link (1") and the aforementioned edge returns to its initial position.

## Patentansprüche

1. Glied einer Förderkette, der Art, die ein Steckmittel einer Kupplung (3) und ein Aufnahmemittel einer Kupplung (2) aufweist; wobei das Aufnahmemittel der Kupplung (2) eine erste obere Oberfläche (9) und eine zweite untere Oberfläche (9') aufweist, die eine Sicke (4) bildet, die in einer engen Öffnung endet; und wobei das Steckmittel der Kupplung (3) einen oberen Abschnitt (8) umfasst und einen Vorsprung (11), der sich in die Längsrichtung des Glieds (1) erstreckt und der ein glockenförmiges Ende (12) aufweist, so dass der obere Abschnitt (8) zusammen mit dem Vorsprung (11) einen Kanal (7) in dem Steckmittel der Kupplung (3) bildet; wobei das genannte Glied (1) **dadurch gekennzeichnet, ist, dass** die Sicke (4) sich zu dem mittleren Bereich des Glieds (1) erstreckt, über einen geraden Abschnitt (6) in eine Querrichtung des Glieds, so dass die Sicke (4) mit dem geraden Abschnitt (6) eine Länge aufweist, die gleich oder größer ist, als die des Vorsprungs (11) des Steckmittels der Kupplung (3), die in Querrichtung des Glieds gemessen wird.

2. Glied nach Anspruch 1, das einen Halte- und Drehzapfen (3) an einem Ende des unteren Abschnitts des glockenförmigen Endes (12) des Vorsprungs (11) des Steckmittels der Kupplung (3) aufweist und eine Halte- und Drehnut (14) am Ende des unteren Abschnitts des Aufnahmemittels der Kupplung (2) aufweist, die dem Halte- und Drehzapfen (13) zugeordnet ist.

3. Glied nach Anspruch 2, wobei der Halte- und Drehzapfen (3) kugelförmig ausgebildet ist.

4. Glied nach einem der vorhergehenden Ansprüche, wobei zumindest ein Rand des unteren Abschnitts (9') des Aufnahmemittels der Kupplung (2) eine Schrägkante (10) umfasst, die in Richtung der Sicke (4) des genannten Aufnahmemittels der Kupplung (2) weist.

5. Glied nach Anspruch 4, wobei eine zweite Schrägkante (15) vorgesehen ist, die sich am Rand der Halte- und Drehnut (14) befindet, um so das Ausbauen eines Glieds (1) in Bezug auf ein danebenliegendes Glied (1) zu vereinfachen.

6. Glied nach einem der vorhergehenden Ansprüche, wobei der Vorsprung (11) des Steckmittels der Kupplung (3) einige scharfe Kanten (5) an dem glockenförmigen Ende (12) aufweist, die mit der ersten oberen Oberfläche (9) und mit der zweiten unteren Oberfläche (9') des Aufnahmemittels der Kupplung (2) in Berührung bleiben.

7. Förderkette, bestehend aus einer Mehrzahl von Gliedern nach einem der vorhergehenden Ansprüche, in der die genannten Glieder in die Längsrichtung der Kette durch Steckverbindungen verbunden bleiben, **dadurch gekennzeichnet, dass** der Vorsprung (11) eines ersten Glieds (1') im Inneren der Sicke (4) mit geradem Abschnitt (6) des Aufnahmemittels der Kupplung (2) eines zweiten Glieds (1") bleibt, wobei das zweite Glied neben dem ersten Glied (1') liegt, und im Inneren der genannten Sicke (4) mit geraden Abschnitt (6) beweglich ist, und so eine Drehung der Kette ermöglicht.

8. Förderkette nach Anspruch 7, wobei alle Glieder einen quer ausgerichteten Halte- und Drehzapfen (3) aufweisen, an einem Ende des unteren Abschnittes des glockenförmigen Endes (12) des Vorsprungs (11) des Steckmittels der Kupplung (3), und eine Halte- und Drehnut (14) am Ende des unteren Abschnitts des Aufnahmemittels der Kupplung (2), die dem Halte- und Drehzapfen (13) zugeordnet ist; und wobei der Halte- und Drehzapfen (11) eines ersten Glieds (1') im Inneren der Halte- und Drehnut (12) eines zweiten Glieds (1"), das neben dem ersten Glied (1') liegt, aufgenommen wird, wobei der Zapfen (13) zwischen den Seitenwänden der Halte- und Drehnut (14) gehalten wird, und das Festhalten der in Querrichtung der Kette nebeneinanderliegenden Glieder sichert; und wobei der Halte- und Drehzapfen (13) sich in die Längsrichtung der Halte- und Drehnut (14) bewegen kann, und so ein Drehen der Kette ermöglicht.

9. Montageverfahren der Kette nach einem der Ansprüche 7 bis 8, **dadurch gekennzeichnet, dass** es einen Schritt umfasst, in dem das Steckmittel der Kupplung (3) eines ersten Glieds (1') in das Innere der Sicke (4) mit geradem Abschnitt (6) des Aufnahmemittels der Kupplung (2) eines zweiten Glieds (1") eingeführt wird, wobei dieses zweite Glied in Querrichtung der Kette neben dem ersten Glied liegt, so dass der Halte- und Drehzapfen (13) des ersten Glieds (1') mit dem unteren Rand des Aufnahmemittels der Kupplung (2) in Berührung kommt, und diesen Rand verformt, bis der Halte- und Drehzapfen (13) in die Halte- und Drehnut (14) des zweiten Glieds (1") eingeführt wird und der zuvor genannte Rand zu seiner Ausgangsposition zurückkehrt.

## Revendications

1. Maillon de chaîne de convoyage ayant un moyen de couplage mâle (3) et un moyen de couplage femelle (2); dans lequel le moyen de couplage femelle (2) comprend une première surface supérieure (9) et une deuxième surface inférieure (9') formant une cannelure (4) qui aboutit en une ouverture étroite; dans lequel le moyen de couplage mâle (3) comprend un segment supérieur (8) et une saillie (11) qui s'étend dans le sens longitudinal du maillon (1) dont l'extrémité a une forme de cloche (12), de façon à ce que le segment supérieur (8) forme avec la saillie (11) un canal (7) au milieu du couplage mâle (3); dans lequel ce maillon (1) est **caractérisé en ce que** la cannelure (4) s'étend vers la zone centrale du maillon (1) à travers une section droite (6) dans le sens transversal du maillon, de façon à ce que la cannelure (4) ait avec la section droite (6) une longueur égale ou supérieure à celle de la saillie (11) du moyen de couplage mâle (3), mesurée dans le sens transversal du maillon.

2. Maillon selon la revendication 1, comprenant un pivot de soutènement et de rotation (3) dans une extrémité de la partie inférieure de l'extrémité sous forme de cloche (12) de la saillie (11) du moyen de couplage mâle (3) et comprenant une rainure de soutènement et de rotation (14) dans l'extrémité de la partie inférieure du moyen de couplage femelle (2), qui correspond au pivot de soutènement et de rotation (13).

3. Maillon selon la revendication 2 dans lequel le pivot de soutènement et de rotation (3) à une forme sphérique.

4. Maillon selon les revendications précédentes dans lequel au moins un bord de la partie inférieure (9') du moyen de couplage femelle (2) comprend un chanfrein (10) orienté vers la cannelure (4) de ce moyen de couplage femelle (2).

5. Maillon selon la revendication 4, dans lequel se trouve un deuxième chanfrein (15) situé au bord de la rainure de soutènement et de rotation (14) afin de faciliter le retrait d'un maillon (1) par rapport à un maillon adjacent (1).

6. Maillon selon les revendications précédentes, dans lequel la saillie (11) de l'élément de couplage mâle (3) comprend plusieurs bords aigus (5) dans l'extrémité sous forme de cloche (12) qui demeurent en contact avec la première surface supérieure (9) et avec la deuxième surface inférieure (9') du moyen de couplage femelle (2).

7. Chaîne de convoyage composée de plusieurs maillons selon les revendications précédentes, dans laquelle les maillons se maintiennent ensemble dans le sens longitudinal de la chaine grâce à un assemblage, **caractérisée en ce que** la saillie (11) d'un premier maillon (1') demeure à l'intérieur de la cannelure (4) à section droite (6) du moyen de couplage femelle (2) d'un deuxième maillon (1") adjacent au premier maillon (1') qui peut se déplacer à l'intérieur de cette cannelure (4) à section droite (6) en permettant ainsi le tour de la chaîne.

8. Chaîne de convoyage selon la revendication 7, dans laquelle tous les maillons comprennent un pivot de soutènement et de rotation transversale (3) à l'extrémité de la partie inférieure de l'extrémité sous forme de cloche (12) de la saillie (11) du moyen de couplage mâle (3), et qui comprend une rainure de soutènement et de rotation (14) à l'extrémité de la partie inférieure du moyen de couplage femelle (2), correspondant au pivot de soutènement et de rotation (13); dans laquelle le pivot de soutènement et de rotation (11) d'un premier maillon (1') se trouve à l'intérieur de la rainure de soutènement et de rotation (12) d'un deuxième maillon (1") adjacent au premier maillon (1'), le pivot (13) étant retenu entre les parois latérales de la rainure de soutènement et de rotation (14) en assurant ainsi le soutènement des maillons adjacents dans le sens transversal de la chaîne; et dans laquelle le pivot de soutènement et de rotation (13) peut se déplacer dans la longueur longitudinale de la rainure de soutènement et de rotation (14), en permettant ainsi la rotation de la chaîne.

9. Procédé de montage de la chaîne selon les revendications 7 et 8, **caractérisé en ce qu'**il comprend une phase d'introduction du moyen de couplage mâle (3) d'un premier maillon (1') à l'intérieur de la cannelure (4) à section droite (6) du moyen de couplage femelle (2) d'un deuxième maillon (1") adjacent au premier maillon dans le sens transversal de la chaîne de façon à ce que le pivot de soutènement et de rotation (13) du premier maillon (1') rentre en contact avec le bord inférieur du moyen de couplage femelle (2), en déformant le bord jusqu'à ce que le pivot de soutènement et de rotation (13) s'introduise dans la rainure de soutènement et de rotation (14) du deuxième maillon (1") et jusqu'à ce que ce bord retourne à sa position initiale.
